# FASCICULE DE BREVET EUROPEEN

(11) **EP 4 030 917 B1**
(45) Date de publication et mention de la délivrance du brevet: **29.11.2023**
(21) Numéro de dépôt: 20768370.7
(22) Date de dépôt: 15.09.2020
(51) Int. Cl.: A21B 3/15

(54) **PLAQUE SUPPORT POUR PRODUITS DE BOULANGERIE, VIENNOISERIE, PATISSERIE ET SIMILAIRES, FABRIQUEE A PARTIR D'UNE FEUILLE EN METAL DEPLOYE**
TRAGEBLECH FÜR BACKWAREN, FEINGEBÄCK, PATISSERIE UND ÄHNLICHE PRODUKTE, HERGESTELLT AUS EINEM STRECKMETALLBLECH
SUPPORT TRAY FOR BAKERY, VIENNOISERIE, PATISSERIE AND SIMILAR PRODUCTS, MADE FROM AN EXPANDED-METAL SHEET

(30) Priorité: 17.09.2019 FR 1910251
(43) Date de publication de la demande: 27.07.2022
(73) Titulaire: MECATHERM, 67130 Barembach (FR)
(72) Inventeur: OUDOT, Jordan, 67130 Russ (FR); SERGENT, Olivier, 75006 Paris (FR)
(74) Mandataire: Cabinet Bleger-Rhein-Poupon
(86) Numéro de dépôt international: PCT/EP2020/075756
(87) Numéro de publication internationale: WO 2021/052954

(56) Documents cités:
- WO-A1-01/65946
- DE-U1- 9 114 841
- FR-A- 1 045 958
- FR-A1- 2 505 142
- FR-A3- 2 995 181
- US-A1- 2017 318 820

## Description

La présente invention concerne un dispositif de plaque support notamment pour la fermentation, la cuisson, le refroidissement et la surgélation de produits de boulangerie, viennoiserie, pâtisserie ou similaires.

La présente invention trouvera son application principalement dans le domaine des ustensiles et des installations de boulangerie industrielle.

Dans ce domaine d'application, on distingue essentiellement deux grandes familles de produits, à savoir :
- les produits qui sont cuits sur des plaques supports ou dans des moules ;
- et les produits cuits directement sur la sole d'un four.

Traditionnellement, pour ce qui concerne la première catégorie de produits, la pâte subit dans un premier temps une étape de division en une pluralité de pâtons. Ensuite, une étape de façonnage des pâtons peut être mise en oeuvre, avant une dépose de ces derniers sur des plaques supports ou dans des moules.

Ces plaques supports vont alors servir pour le transport et l'acheminement des pâtons au travers des différentes unités de traitement des produits de boulangerie généralement présentes sur une installation de production de boulangerie industrielle, telles que notamment les unités de fermentation, de cuisson, de surgélation et de refroidissement.

Il existe de nombreux types de plaques supports de produits de boulangerie ou similaires, celles-ci pouvant être également dénommées plaques de cuisson dans la suite de la description.

Ainsi, en particulier, une telle plaque support peut comporter un matériau support monté solidaire d'un cadre. Celui-ci constitue alors un châssis assurant la rigidité de l'ensemble de ladite plaque en vue de sa manutention.

Dans un exemple de réalisation particulier, le matériau support consiste en une tôle pleine qui peut notamment être conformée par pliage de manière à ménager des logements de réception des pâtons. Une forme spécifique consiste, par exemple, en une ondulation du matériau support en sorte de former des logements en creux, également dénommés alvéoles ou goulottes. On parle alors de « plaque alvéolée », une telle plaque étant mise en oeuvre dans le procédé de fabrication de produits de boulangerie et similaires pour conférer, à ces produits, une forme arrondie.

Dans ce type de plaque support, il est possible de disposer, dans un seul et même logement, une pluralité de pâtons espacés les uns des autres, le nombre de pâtons réceptionnés dans une goulotte étant fonction, d'une part, de la longueur de ladite goulotte ainsi que, d'autre part, des dimensions du ou des pâtons.

Il est ainsi connu, de la demande internationale de brevet publiée sous le n° WO 2015/044588, un dispositif de plaque support pour la cuisson de produits de boulangerie ou similaires comprenant un cadre sur lequel est fixé un matériau support plein conformé de manière à ménager des logements de réception de pâtons.

Ces logements s'étendent parallèlement entre eux depuis un bord jusqu'au bord opposé de la plaque, et chacun de ces logements est constitué d'une tôle pleine de section arquée. En outre, les bords adjacents des deux logements contigus sont espacés de manière à ménager une fente continue entre eux, en sorte de rendre les logements indépendants les uns des autres.

Un tel dispositif présente certains avantages, notamment celui de pouvoir remplacer un des logements en cas de détérioration de celui-ci sans nécessiter de remplacer l'intégralité du dispositif.

Un autre avantage de ce dispositif de plaque support comportant des logements indépendants réside dans le fait que les contraintes mécaniques appliquées à la plaque sont substantiellement diminuées, notamment les déformations liées à la dilatation du matériau. En effet, les bords longitudinaux supérieurs de chaque logement étant libres, ils peuvent se dilater sans contrainte.

A noter également que l'espace entre les alvéoles ou logements que contient une plaque laisse passer le flux d'air du four afin de garantir une cuisson optimale de tous les pâtons disposés sur la plaque, y compris ceux qui sont situés au centre de ladite plaque.

En outre, la mise en oeuvre de tôles pleines pour la cuisson de pâtons devrait permettre de conférer au produit final un aspect lisse au niveau de sa sole, comparable à l'aspect des produits obtenus suite à une cuisson sur pierre.

Cependant, l'humidité et le gaz, se dégageant nécessairement au niveau du dessous des pâtons lors du process de fabrication des produits boulangers, ne peuvent pas s'évacuer au travers d'une tôle pleine. Plus particulièrement, c'est lors de la phase de fermentation, également appelée phase d'étuvage, que le produit évacue des gaz et de l'humidité. En outre, au cours de l'étape de refroidissement, le produit évacue également de l'humidité. Cette phase, pendant laquelle le produit évacue de l'humidité après cuisson, lorsque sa croûte est déjà formée, est aussi appelée ressuage.

Un tel dégagement de gaz et d'humidité lors de la phase de fermentation entraine, lorsque la cuisson s'effectue sur la même plaque que celle utilisée en phase de fermentation, la formation de crevasses au niveau de la sole du produit, observables après la phase de cuisson, et conférant, au final, un aspect inesthétique à la sole du produit final.

Quant au dégagement d'humidité lors de la phase de refroidissement, il entraine, au niveau de la sole du produit, une humidification et un ramollissement subséquent, en d'autres termes une texture et un aspect finaux non satisfaisants.

Lors de la phase de cuisson des produits, au cours d'une première étape de cuisson, de la vapeur d'eau est injectée dans le four, puis, dans une seconde étape, l'ambiance dans le four est sèche. Au cours de la cuisson, les produits dégagent également de l'humidité. Cependant, la chaleur de la sole du four est telle que le pâton est immédiatement « saisi » et que la croûte se forme de façon suffisamment rapide pour empêcher l'humidité, rejetée au niveau de la sole, d'entrainer la formation de crevasses. En d'autres termes, l'ambiance dans le four, chaude et sèche lors de la seconde étape de cuisson, est propice à une absorption de l'humidité évacuée par le pâton, contrairement à la phase d'étuvage notamment, au cours de laquelle le produit reste un temps relativement long dans une ambiance déjà humide.

Cela étant, afin de supprimer, ou au moins de limiter la présence de crevasses, les produits peuvent être déposés sur des plaques qui ont été, au préalable, farinées. La farine a pour objectif d'absorber l'évaporation de l'eau formée au niveau de la sole du produit et, par conséquent, d'éviter l'apparition de gouttelettes d'eau à l'interface de la plaque et du produit et qui seraient susceptibles de provoquer la formation des crevasses.

Cependant, le procédé de farinage présente des inconvénients, et en premier lieu celui du risque d'accumulation de farine sur la ligne de production. Cette accumulation est susceptible d'entrainer un encrassement de ladite ligne ainsi que des dépôts de farine dans le four pouvant être la cause de départ d'incendies.

En outre, en mettant en oeuvre un tel procédé, il n'est plus possible de proposer au consommateur des produits non farinés en sole.

Une autre possibilité consiste à effectuer l'étape de fermentation des pâtons sur des plaques fabriquées à partir de matériaux plastiques et qui ont été préalablement farinées ou semoulées, pour éviter l'apparition de crevasses, avant de transférer lesdits pâtons dans une gouttière d'une plaque support réalisée en tôle pleine en vue de leur cuisson.

Cependant, la mise en oeuvre d'une telle possibilité suppose la présence et le fonctionnement de systèmes mécaniques complexes de prélèvement et dépose des pâtons de la première plaque utilisée pour la fermentation vers la deuxième plaque sur laquelle aura lieu la cuisson. Par conséquent, ces opérations de prélèvement et de dépose apportent, nécessairement, des contraintes importantes, notamment en termes de gestion des différents jeux de plaques et de maintenance des équipements mécaniques.

Dans l'état de la technique, il est également connu d'utiliser des plaques supports présentant une tôle dans laquelle est ménagée une pluralité de perforations, ou orifices, réparties régulièrement sur l'ensemble de sa surface.

Traditionnellement, dans les plaques supports de l'état de la technique comprenant des tôles perforées, obtenues par enlèvement de matière, notamment par poinçonnage, les perforations sont généralement circulaires et leur diamètre est compris entre 1,8 et 3 mm. En ce qui concerne le pourcentage de vide, ou taux d'ouverture, au niveau d'une plaque celui-ci est de l'ordre de 40%. Ce taux d'ouverture peut aller parfois jusqu'à 50% de vide, voire plus, un tel taux étant considéré comme nécessaire pour que la plaque support permette une évacuation satisfaisante, par le bas, de l'humidité produite et rejetée au niveau du dessous du pâton au cours de l'étape de fermentation.

On connait par exemple, de la demande de brevet français publiée sous le n° FR 2 756 706, un dispositif pour filet de boulangerie comprenant un bâti support sur lequel est disposée une feuille métallique ou toile perforée, conformée selon un profil sinusoïdal en sorte de définir une pluralité de canaux longitudinaux constituant des logements de réception de pains.

La feuille métallique du dispositif présente ici un taux de vide important et supérieur à 25%, en sorte de permettre une répartition homogène de la chaleur et une évacuation de l'eau en cours de cuisson. En outre, elle est recouverte d'une couche mince d'un polymère antiadhérent, pulvérisé sur la feuille.

Sur cette feuille métallique est rapporté un profilé souple amovible en matériau antiadhérent conformé pour venir se plaquer dans un des canaux longitudinaux, comportant également des perforations.

De telles plaques présentent l'avantage de permettre une évacuation efficace et optimale de l'humidité et des gaz se dégageant des pâtons lors de certaines étapes du process de fabrication, notamment la fermentation et le refroidissement, tout en assurant une bonne transmission de l'air et de la chaleur de cuisson.

Cependant, d'un autre côté, si les produits cuits sur de telles plaques perforées, intégrant ou non un profilé antiadhérent également perforé, présentent une cuisson homogène et sans apparition de crevasses dues à l'humidité relarguée par les produits, les perforations entrainent inévitablement un marquage des produits sur le dessous.

Or, un tel marquage confère au produit une impression de cuisson industrielle qui présente une connotation négative aux yeux des consommateurs, ces derniers considérant alors, inconsciemment, que le produit est de mauvaise qualité, alors qu'est recherché, généralement, un produit ayant un aspect évoquant une fabrication artisanale.

On connait également, dans l'état de la technique, de la demande de modèle d'utilité DE 9114841 et des demandes de brevet FR 1 045 958 et WO 01/65946, des plaques de cuisson ou ustensiles de cuisine fabriqués à partir de métal déployé laminé. Dans le dernier document, les mailles du métal déployé qui est employé se présentent sous la forme de losanges présentant des dimensions relativement importantes, typiquement de 6 mm par 20 mm, ne permettant pas de résoudre la problématique qui se pose, mentionnée au paragraphe précédent.

L'invention offre la possibilité de pallier, au moins en partie, les divers inconvénients de l'état de la technique en proposant un dispositif de plaque support destiné à recevoir une pluralité de pâtons pour leur acheminement notamment au travers des unités de fermentation et de cuisson d'une installation de fabrication de produits de boulangerie ou similaires, ledit dispositif permettant, à la fois, une évacuation optimale de l'humidité rejetée par le produit, tout en évitant un marquage disgracieux de la surface inférieure, ou sole, du produit provenant en particulier des marques dues aux perforations, et qui qualifierait le produit comme étant de fabrication industrielle aux yeux des consommateurs.

A cet effet, la présente invention concerne un dispositif de plaque support pour le transport de produits de boulangerie, pâtisserie, viennoiserie ou similaires au travers d'au moins une unité de traitement d'une installation de production de tels produits, ledit dispositif comprenant un cadre sur lequel est fixée au moins une feuille de matériau métallique, ledit dispositif étant caractérisé par le fait que ladite feuille métallique consiste en une feuille en métal déployé comprenant des micromailles formant un treillis métallique, lesdites micromailles présentant une ouverture de passage comprise entre 130 et 750 µm et ladite feuille en métal déployé comprenant, du fait desdites micromailles, une surface de vide comprise entre 17 et 60% de la surface totale de ladite feuille.

Selon une caractéristique toute préférentielle, permettant encore une diminution du marquage en sole des produits, ledit dispositif est caractérisé par le fait que ladite feuille métallique consiste en une feuille en métal déployé comprenant des micromailles formant un treillis métallique, lesdites micromailles présentant une ouverture de passage comprise entre 130 et 250 µm et ladite feuille en métal déployé comprenant, du fait desdites micromailles, une surface de vide comprise entre 17 et 45% de la surface totale de ladite feuille.

La feuille en métal déployé employée dans le dispositif de plaque support de l'invention peut être avantageusement obtenue par découpe et étirement d'une feuille métallique.

Dans un exemple de réalisation préférentiel, ladite feuille en métal déployé comprenant des micromailles est recouverte d'un revêtement antiadhérent, celui-ci consistant soit en du polytétrafluoroéthylène (PTFE), soit en un revêtement sol-gel, ou bien encore en un polymère de silicone.

Préférentiellement, ladite feuille en métal déployé comprenant des micromailles est fabriquée en un matériau métallique choisi parmi l'aluminium et l'acier inoxydable.

Ladite feuille en métal déployé peut être avantageusement conformée par pliage en sorte de former au moins une alvéole sensiblement demi-ronde constituant un logement en creux de réception d'au moins un pâton ou d'au moins un pain ou similaire, ladite alvéole s'étendant longitudinalement d'un bord à l'autre de ladite plaque support.

Dans un exemple de réalisation avantageux, le dispositif de plaque support de l'invention comporte une pluralité de feuilles en métal déployé conformées, chacune, par pliage en sorte de former une alvéole sensiblement demi-ronde constituant un logement en creux de réception d'au moins un pâton ou d'au moins un pain ou similaire, chacune des alvéoles s'étendant longitudinalement d'un bord à l'autre de ladite feuille entre deux supports d'alvéoles longitudinaux.

Dans un exemple de réalisation différent la surface de ladite feuille en métal déployé est plane ou sensiblement plane dans le dispositif de plaque support de l'invention.

Les micromailles de ladite feuille en métal déployé qui équipe le dispositif de plaque support de l'invention peuvent présenter une forme de losange dont l'ouverture de passage est de 200 µm et dont les dimensions sont de 0,6 mm (LD -Longue Diagonale) x 0,4 mm (CD-Courte Diagonale) x 0,12 mm (La.-largeur de la lanière) x 0,10 mm (Ep.-épaisseur de la lanière), ladite feuille en métal déployé présentant une surface de vide égale à 28% de la surface totale de ladite feuille.

Les micromailles de ladite feuille en métal déployé qui équipe le dispositif de plaque support de l'invention peuvent également présenter une forme de losange dont l'ouverture de passage est de 200 µm et les dimensions sont de 0,75 mm (LD) x 0,5 mm (CD) x 0,20 mm (La.) x 0,15 mm (Ep.), ladite feuille en métal déployé présentant une surface de vide égale à 29% de la surface totale de ladite feuille.

Les micromailles de ladite feuille en métal déployé qui équipe le dispositif de plaque support de l'invention peuvent encore présenter une forme de losange dont l'ouverture de passage est de 250 µm et les dimensions sont de 0,85 mm (LD) x 0,7 mm (CD) x 0,20 mm (La.) x 0,15 mm (Ep.), ladite feuille en métal déployé présentant une surface de vide égale à 30% de la surface totale de ladite feuille.

La présente invention comporte de nombreux avantages et en particulier celui de permettre, par l'emploi d'une tôle en métal déployé au niveau d'un dispositif de plaque support de produits de boulangerie et similaire, une réduction substantielle, voire une suppression totale ou quasi-totale, du marquage du dessous du produit en cours de cuisson, en comparaison avec le marquage résultant des plaques perforées actuellement utilisées.

En outre, malgré une réduction non négligeable du taux d'ouverture, comparativement avec les tôles de l'état de la technique, une évacuation efficace de l'humidité reste assurée par les micromailles lors de certaines étapes de la fabrication des produits de panification et notamment lors des étapes de fermentation et de refroidissement.

Le dispositif de plaque support de l'invention est également économique à produire, et présente une résistance mécanique particulièrement intéressante qui perdure au cours du temps.

D'autres caractéristiques et avantages de l'invention ressortiront de la description détaillée qui va suivre des modes de réalisation non limitatifs de l'invention, en référence aux figures annexées dans lesquelles :
[Fig.1] illustre, de manière schématique, une vue en perspective d'un mode de réalisation particulier d'un dispositif de plaque support de produits de boulangerie ou analogues comprenant un cadre sur lequel sont solidarisées plusieurs alvéoles constituées, chacune, d'une feuille en métal déployé comprenant des micromailles et conformée en sorte de constituer un logement pour au moins un pâton ou autre, lesdites alvéoles s'étendant longitudinalement d'un bord à l'autre dudit dispositif de plaque.
[Fig.2A] est une représentation schématique, selon une vue en perspective, d'un mode de réalisation particulier du cadre du dispositif de plaque support de la figure 1 et comportant une pluralité de supports longitudinaux d'alvéoles.
[Fig.2B] est une représentation schématique, selon une vue en perspective, d'un mode de réalisation particulier d'une alvéole que comporte le dispositif de plaque support de la figure 1.
[Fig.3A] est une représentation schématique, selon une vue de côté, d'un détail du dispositif de plaque support illustré sur la figure 1.
[Fig.3B] est une représentation schématique, selon une vue de côté, d'un détail agrandi de la figure 3A.
[Fig.4A] est une photographie permettant de comparer, à gauche, un dispositif de plaque support selon la présente invention comportant une feuille en métal déployé comprenant des micromailles et, à droite, un dispositif de plaque support comprenant une feuille métallique perforée.
[FIG.4B] est une photographie de la sole d'un produit de boulangerie, en l'occurrence une baguette de pain, obtenue après cuisson du produit sur un dispositif de plaque support selon l'invention tel que celui représenté à gauche sur la figure 4A.
[FIG.4C] est une photographie de la sole d'un produit de boulangerie, en l'occurrence une baguette de pain, obtenue après cuisson du produit sur une plaque standard perforée d'un dispositif de plaque support, tel que celui représenté à droite sur la figure 4A.

La présente invention concerne le domaine de la boulangerie industrielle, et plus particulièrement la fabrication de produits de boulangerie, pâtisserie, viennoiserie ou similaires au travers d'une installation de production adéquate et comprenant au moins une unité de traitement desdits produits, et de préférence une pluralité de telles unités.

Ainsi, une installation de production de tels produits peut comporter notamment, au moins, une étuve de fermentation et/ou un four de cuisson et/ou un refroidisseur et/ou un surgélateur.

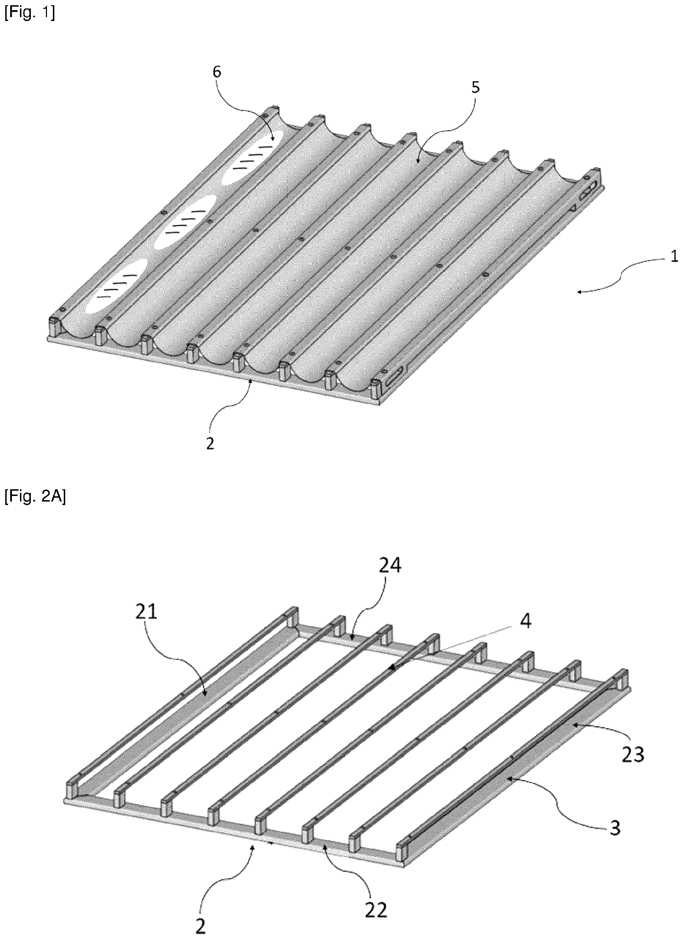

Plus particulièrement, et telle que représentée sur la figure 1 annexée, la présente invention concerne un dispositif 1 de plaque support pour l'acheminement des produits de boulangerie, pâtisserie, viennoiserie ou similaires au travers de ces différentes unités de traitement qui composent une installation de production de tels produits.

En effet, généralement, les pâtons, issus d'une étape de division de la pâte et éventuellement d'une étape subséquente de façonnage, sont disposés sur un tel dispositif 1 de plaque support, afin de faciliter la manutention desdits pâtons au travers des unités de traitement évoquées précédemment.

Plus précisément, selon l'invention, et en référence aux figures 1, 2A, 2B, et 3, le dispositif de plaque support 1 comporte notamment un cadre 2, visible en détail et en intégralité sur la figure 2A, qui peut être, par exemple mais non limitativement, constitué d'un assemblage de plusieurs profilés tubulaires métalliques 21, 22, 23, 24 formant un châssis 3, par exemple rectangulaire, assurant notamment la rigidité de l'ensemble du dispositif 1.

Préférentiellement, sur ce châssis 3 peuvent être montés au moins deux et, de préférence, une pluralité de supports transversaux 4 juxtaposés, chacun reliant deux profilés tubulaires 22, 24, qui sont parallèles sur le châssis 3.

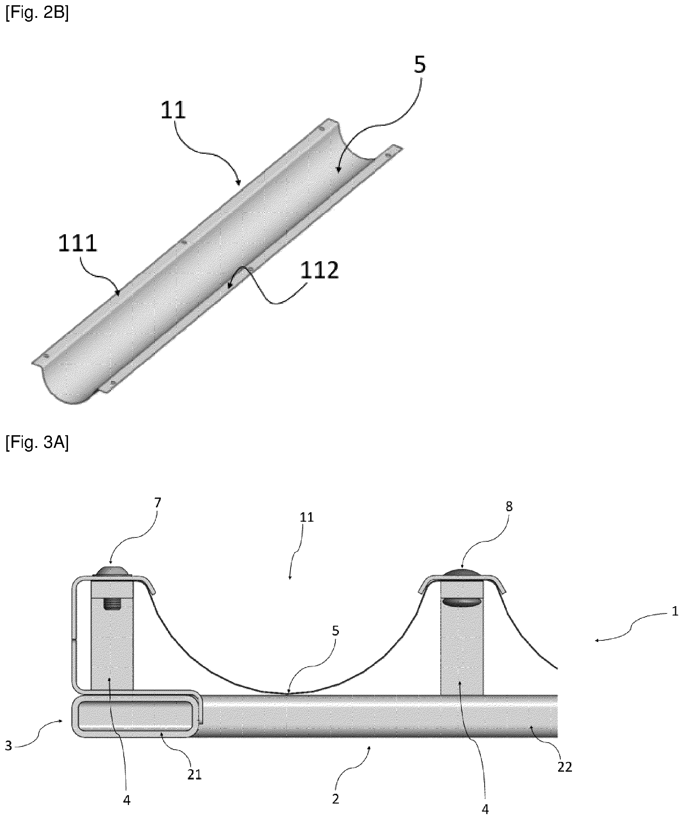

Entre deux supports transversaux 4 juxtaposés peut être solidarisée une feuille support 5 en matériau métallique, celle-ci pouvant avantageusement être conformée, par exemple, par pliage, en sorte de former une alvéole 11, ou gouttière, sensiblement demi-ronde, comme visible notamment en détail sur la figure 2B. Préférentiellement, deux rebords longitudinaux 111, 112 prolongent le demi-rond à chacune de ses extrémités, et sur l'ensemble de la longueur de l'alvéole 11.

Ainsi, cette feuille métallique 5 conformée en alvéole peut constituer un logement en creux destiné à réceptionner au moins un pâton 6, par exemple, ledit logement s'étendant longitudinalement entre les deux bords extrêmes de ladite feuille 5.

En fonction de la longueur de la feuille de matériau métallique 5 et de la dimension desdits pâtons 6, plusieurs pâtons 6 pourront être réceptionnés dans un seul et même logement.

De manière avantageuse, cette feuille support de matériau métallique 5 est solidarisée, au niveau des rebords longitudinaux 111, 112 de l'alvéole 11 auxdits supports transversaux 4 du châssis 3 par vissage et/ou rivetage au moyen, respectivement, de vis 7 et/ou de rivets 8.

Comme visible notamment sur la figure 1, le dispositif de plaque support 1 de l'invention comporte une pluralité de feuilles métalliques 5 conformées, chacune, par pliage pour former une alvéole demi-ronde 11 pour la réception d'un ou plusieurs pâtons 6.

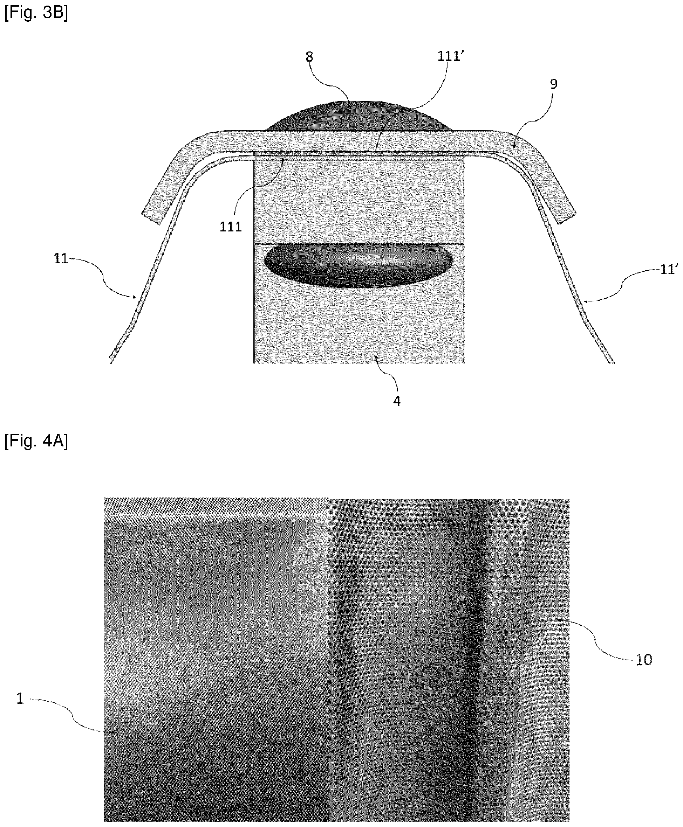

Dans ce mode de réalisation, et en référence aux figures 3A et 3B, chacune des alvéoles 11 est solidarisée à deux supports d'alvéoles 4 juxtaposés, deux alvéoles 11, 11' adjacentes étant solidarisées à un support d'alvéoles 4 commun par superposition de leurs rebords longitudinaux 111, 111' respectifs.

En outre, de manière avantageuse, un moyen de recouvrement 9, visible sur la figure 3B, et se présentant notamment sous la forme d'une portion de tôle, peut être rapporté sur le dessus des rebords longitudinaux 111, 111' superposés, notamment pour assurer la fixation des alvéoles par rivetage et/ou par vissage.

Dans un autre mode de réalisation, tout aussi intéressant, mais non représenté sur les figures, dudit dispositif 1 de plaque support de l'invention, il peut être conféré, par pliage, à une seule feuille métallique support 5, une ondulation formant ainsi une pluralité de logements en creux pour la réception de pâtons 6, deux logements adjacents étant séparés par la crête d'une onde, dans laquelle est(sont) éventuellement ménagée(s) une ou plusieurs rainure(s) pour un meilleur passage du flux d'air entre les logements.

Il est également envisageable que la feuille ou tôle métallique 5, dans un mode de réalisation non représenté sur les figures, soit plane ou sensiblement plane et solidarisée au cadre 2 du dispositif 1 de plaque support de l'invention, en venant en recouvrement, au moins en partie, des profilés tubulaires formant ledit cadre 2.

Selon une particularité essentielle du dispositif 1 de plaque support de produit de boulangerie l'invention, la feuille métallique 5, qui est destinée à supporter notamment les pâtons 6, est une feuille en métal déployé présentant des micromailles de taille relativement petite.

Une telle feuille en métal déployé destinée à équiper le dispositif 1 de l'invention peut être obtenue par cisaillement ou découpage, au moyen de couteaux par exemple, et étirage, généralement simultanés, d'une feuille métallique pleine, en sorte d'obtenir un maillage ouvert sous la forme d'un treillis métallique tridimensionnel, sans enlèvement de matière. Une étape d'aplatissement par laminage peut, optionnellement, être réalisée avant ou après l'étirage.

Généralement, les micromailles du treillis présentent la forme de losanges, laissant pour chaque losange formé, un vide entouré de barres de métal interconnectées, définissant la dimension d'une ouverture de passage, des particules présentant des dimensions supérieures à cette ouverture de passage ne pouvant pas passer au travers des mailles. Plus particulièrement, à partir du moment où la plus petite des dimensions d'une particule (longueur, largeur, diagonale, diamètre, etc.) est supérieure à cette ouverture de passage, ladite particule ne peut pas traverser les micromailles.

Selon l'invention, ladite feuille en métal déployé 5 comprend des micromailles présentant une ouverture de passage comprise entre 130 et 750 µm, ladite feuille en métal déployé comprenant, du fait desdites micromailles, une surface de vide comprise entre 17 et 60% de la surface totale de ladite feuille.

Un dispositif de plaque support 1 présentant une feuille en métal déployé 5 avec de telles caractéristiques, en termes d'ouverture de passage des micromailles 4 et de surface de vide de ladite feuille 5, permet la production de produits finis ayant une qualité optimale, notamment au niveau de la sole de ces produits.

Dans un mode de réalisation encore plus avantageux du dispositif 1 de l'invention, la feuille en métal déployé 5 qu'il comporte présente des micromailles dont l'ouverture de passage est comprise entre 130 et 250 µm tandis que la proportion de vide, ou surface ouverte, formée du fait des micromailles atteint entre 17 et 45 % par rapport à la surface totale de la feuille métallique en métal déployé 5.

On améliore encore, au moyen d'un tel dispositif 1, la qualité de la sole des produits obtenus finalement, le marquage de celle-ci étant quasiment inexistant.

En particulier, la surface inférieure dudit produit, autrement dit la sole de celui-ci, qui ne présente plus qu'un marquage difficilement observable à l'œil, et aucune crevasse, l'humidité ayant été correctement évacuée au travers du vide que contiennent les mailles, tandis que les micromailles n'ont que très peu imprimé leur structure sur le produit.

En référence aux figures 4A à 4C, des essais de cuisson de produits, en l'occurrence des baguettes, ont été réalisés, d'une part, avec une plaque support 10 comprenant des alvéoles fabriquées avec une tôle en métal perforé, présentant des perforations d'un diamètre égal à 1,8 mm et un taux de vide égal à 40% et, d'autre part, avec un dispositif de plaque support 1 avec des alvéoles fabriquées avec une feuille en métal déployé, chacune des deux plaques testées présentant une couche d'un revêtement antiadhérent en silicone.

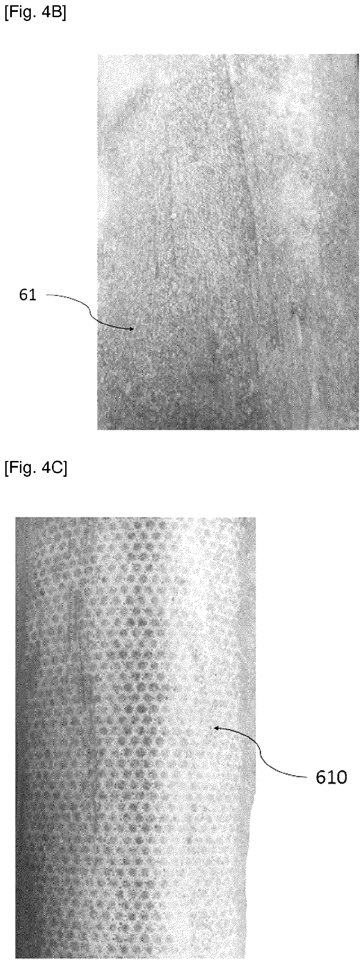

Les résultats obtenus montrent bien que, visuellement, l'aspect de la sole 61 du produit, c'est-à-dire le dessous du produit, est bien plus qualitatif lorsque ce dernier est cuit en reposant sur un dispositif de plaque support 1 en métal déployé (figure 4B), en comparaison avec la sole 610 du produit obtenu après cuisson sur une plaque 10 en métal perforé (figure 4C).

En d'autres termes, au moyen d'un dispositif de plaque support 1 fabriqué avec du métal déployé, la sole du produit n'est quasiment pas marquée en cours de cuisson, ou de précuisson également, et le produit fini présente, par conséquent, un aspect évoquant une fabrication artisanale. Un tel aspect est visible sur la photographie de la figure 4B.

A noter que les micromailles en forme de losange d'une feuille métallique en métal déployé 5 composant le dispositif de plaque support 1 de l'invention sont définies par quatre dimensions au moins, à savoir la Longue Diagonale (LD) du losange, sa Courte Diagonale (CD), la largeur de sa Lanière (La.) et l'Epaisseur de sa lanière (Ep.). Traditionnellement, les dimensions d'une micromaille en losange sont donc spécifiées comme suit : LD x CD X La. X Ep.

Les résultats obtenus après cuisson et illustrés par la photographie de la figure 4C ont été obtenus au moyen d'un dispositif de plaque support 1 comprenant une feuille en métal déployé 5 dont les micromailles en losange présentent les dimensions 0,85 x 0,7 - 0,20 x 0,15 mm, avec une surface de vide égale à 30 %, lesdites micromailles présentant une ouverture de passage égale à 250 µm.

Cependant, d'autres dimensions de micromailles permettent d'obtenir des résultats optimaux en terme d'absence de marquage au niveau de la sole, tout en conservant une évacuation satisfaisante de l'humidité, à savoir, selon des exemples de dimensions non limitatifs :
- 0.6 x 0.4 x 0.12 x 0.10 mm, 28% de surface de vide, passage 200 µm ;
- 0.75 x 0.5 x 0.20 x 0.15 mm, 29% de surface de vide, passage 200 µm ;
- 0.85 x 0.7 x 0.15 x 0.15 mm, 45% de surface de vide, passage 250 µm ;
- 1.25 x 1 x 0.2 x 0.2 mm, 45% de surface de vide, passage 550 µm ;
- 1.5 x 1 x 0.15 x 0.15 mm, 56% de surface de vide, passage 750 µm ;
- 1.25 x 1 x 0.15 x 0.15 mm, 60% de surface de vide, passage 600 µm ;

A noter encore que les micromailles de la feuille de métal déployé 5 que comporte le dispositif 1 de plaque support de l'invention peuvent présenter une forme différente de celle d'un losange, notamment une forme carrée, une forme rectangulaire, une forme hexagonale, ou bien encore une forme ronde.

Avantageusement, ladite feuille de métal déployé 5 consiste en une feuille en aluminium, en acier, ou en acier inoxydable, celle-ci présentant préférentiellement une épaisseur extrêmement fine, généralement inférieure à 0,3 mm.

Quel que soit le mode de réalisation retenu, notamment en termes de dimensions des micromailles et de nature du matériau métallique, la feuille en métal déployé 5, peut avantageusement être recouverte au moyen d'un revêtement antiadhérent afin de faciliter le retrait des pâtons 6 après cuisson.

Dans un premier mode de réalisation, le traitement antiadhérent est effectué au moyen de polytétrafluoroéthylène (ou PTFE), ce composé étant également connu sous la marque déposée « Téflon ».

Dans un deuxième mode de réalisation, le revêtement antiadhérent consiste en un revêtement sol-gel, pouvant être appliqué par tout moyen approprié et connu de l'homme du métier, et notamment par pulvérisation.

Enfin, dans encore un autre mode de réalisation, le revêtement antiadhérent est constitué par un polymère de silicone, pouvant également être appliqué par pulvérisation.

Les dispositifs de plaques supports 1 selon l'invention sont particulièrement intéressants et avantageux pour le transport et l'acheminement des produits de panification au sein des différentes unités de fermentation, de cuisson et de refroidissement d'une installation de fabrication de ces produits et entre ces différentes unités.

En effet, c'est au cours de ces étapes mises en oeuvre dans le procédé de fabrication des produits de boulangerie et similaires qu'il est nécessaire d'assurer une évacuation optimale de l'humidité formée sur le dessous du produit, en d'autres termes au niveau de la surface inférieure du produit qui est directement au contact de ladite plaque support 1, afin d'éviter la formation de crevasses au niveau de cette surface.

Il a été mis en évidence, par la demanderesse, que les caractéristiques de la plaque support 1 de l'invention permettent d'éviter la formation de picots visibles sur la surface inférieure du pâton 6 en contact avec ladite plaque 1, ce que ne permettent pas les plaques perforées traditionnellement utilisées comme support. On évite ainsi au maximum, en mettant en oeuvre le présent dispositif de plaque support 1, la formation d'un marquage qui connoterait de manière négative le produit fini.

Au-delà de cette nette amélioration, le marquage de la sole du produit obtenu par la plaque support 1 de l'invention est similaire à celui d'un produit cuit directement sur une sole pierre. Ainsi, la différence visuelle de qualité entre un produit cuit sur un support, de type plaque, et cuit directement sur sole, est supprimée.

Selon un autre aspect ne faisant pas partie des revendications, il est également divulgué un procédé de fabrication d'un dispositif de plaque support 1 tel que décrit précédemment et comportant notamment un cadre 2 sur lequel est fixée au moins une feuille de matériau métallique 5, celle-ci consistant en une feuille en métal déployé.

Le procédé de fabrication comporte, au moins, les étapes suivantes :
- On réalise des ouvertures, de préférence par découpe et étirement, généralement simultanés, dans une feuille en matériau métallique, avantageusement en acier inoxydable, ladite feuille présentant, préférentiellement, une épaisseur inférieure à 0,3 mm ;
- Optionnellement, on effectue une mise en forme de ladite feuille en matériau métallique 5, notamment par pliage en sorte de former au moins une alvéole 11, ou une pluralité d'alvéoles, l'alvéole ou chacune des alvéoles ainsi formée(s) étant sensiblement demi-ronde et constituant un logement en creux de réception d'au moins un pâton ou d'au moins un pain ou similaire, ladite alvéole 11 s'étendant longitudinalement d'un bord à l'autre de ladite plaque support 1 ;
- On assemble ladite feuille en matériau métallique 5 sur ledit cadre 2.

Dans un exemple de réalisation avantageux de ce procédé, soit avant l'étape d'assemblage de la feuille en matériau métallique 5 sur le cadre 2, soit après cette étape, on dépose une couche de revêtement antiadhérent à la surface de cette feuille, ledit revêtement étant choisi parmi le polytétrafluoroéthylène, le silicone, ou un revêtement sol-gel.

De manière préférentielle, on dépose une couche de revêtement antiadhérent présentant une épaisseur inférieure ou égale à 500 µm, en sorte d'éviter une obturation des micromailles de la feuille en métal déployé.

Cette étape de dépose du revêtement antiadhérent peut être effectuée par tout moyen connu de l'homme du métier, et notamment par pulvérisation.

Optionnellement, préalablement à l'étape au cours de laquelle on dépose une couche de revêtement antiadhérent à la surface de la feuille en matériau métallique 5, on effectue au moins un traitement de surface de ladite feuille.

Ce traitement de surface peut notamment consister en un traitement par brossage ou en un traitement plasma qui a pour but de faciliter l'adhésion du revêtement antiadhérent qui sera déposé ultérieurement à la surface de la feuille en matériau métallique.

En particulier, la réalisation d'un traitement plasma permet de conférer ladite feuille en matériau métallique une bonne rugosité sans la déformer.

Bien entendu, l'invention n'est pas limitée aux exemples illustrés et décrits précédemment, l'invention étant seulement limitée par la portée des revendications annexées.

## Revendications

1. Dispositif de plaque support (1) pour le transport de produits de boulangerie, pâtisserie, viennoiserie ou similaires au travers d'au moins une unité de traitement d'une installation de production de tels produits, ledit dispositif (1) comprenant un cadre (2) sur lequel est fixée au moins une feuille de matériau métallique (5) consistant en une feuille en métal déployé, ledit dispositif étant **caractérisé par le fait que** ladite feuille métallique comprend des micromailles formant un treillis métallique, lesdites micromailles présentant une ouverture de passage comprise entre 130 et 750 µm et ladite feuille en métal déployé comprenant, du fait desdites micromailles, une surface de vide comprise entre 17 et 60% de la surface totale de ladite feuille.

2. Dispositif de plaque support (1) selon la revendication 1 **caractérisé en ce que** lesdites micromailles présentent une ouverture de passage comprise entre 130 et 250 µm et ladite feuille en métal déployé comprenant, du fait desdites micromailles, une surface de vide comprise entre 17 et 45% de la surface totale de ladite feuille.

3. Dispositif de plaque support (1) selon la revendication 1 ou la revendication 2 **caractérisé en ce que** ladite feuille en métal déployé comprenant des micromailles est recouverte d'un revêtement antiadhérent.

4. Dispositif de plaque support (1) selon la revendication 3 **caractérisé en ce que** ledit revêtement antiadhérent consiste en du polytétrafluoroéthylène (PTFE).

5. Dispositif de plaque support (1) selon la revendication 3 **caractérisé en ce que** ledit revêtement antiadhérent consiste en un revêtement sol-gel.

6. Dispositif de plaque support (1) selon la revendication 3 **caractérisé en ce que** ledit revêtement antiadhérent consiste en un polymère de silicone.

7. Dispositif de plaque support (1) selon l'une quelconque des revendications 1 à 6 **caractérisé en ce que** ladite feuille en métal déployé comprenant des micromailles est fabriquée en un matériau métallique choisi parmi l'aluminium et l'acier inoxydable.

8. Dispositif de plaque support (1) selon l'une quelconque des revendications 1 à 7 **caractérisé en ce que** ladite feuille en métal déployé est conformée par pliage en sorte de former au moins une alvéole sensiblement demi-ronde (11) constituant un logement en creux de réception d'au moins un pâton ou d'au moins un pain ou similaire, ladite alvéole (11) s'étendant longitudinalement d'un bord à l'autre de ladite plaque support (1).

9. Dispositif de plaque support (1) selon l'une quelconque des revendications 1 à 8 **caractérisé en ce qu'**il comporte une pluralité de feuilles en métal déployé conformées, chacune, par pliage en sorte de former une alvéole sensiblement demi-ronde (11) constituant un logement en creux de réception d'au moins un pâton ou d'au moins un pain ou similaire, chacune des alvéoles (11) s'étendant longitudinalement d'un bord à l'autre de ladite feuille entre deux supports d'alvéoles longitudinaux.

10. Dispositif de plaque support (1) selon l'une quelconque des revendications 1 à 7 **caractérisé en ce que** la surface de ladite feuille en métal déployé est plane ou sensiblement plane.

11. Dispositif de plaque support (1) selon l'une quelconque des revendications 1 à 10 **caractérisé en ce que** les micromailles de ladite feuille en métal déployé présentent une forme de losange dont l'ouverture de passage est de 200 µm et les dimensions sont de 0,6 mm (LD -Longue Diagonale) x 0,4 mm (CD-Courte Diagonale) x 0,12 mm (La.-largeur de la lanière) x 0,10 mm (Ep.-épaisseur de la lanière), ladite feuille en métal déployé présentant une surface de vide égale à 28% de la surface totale de ladite feuille.

12. Dispositif de plaque support (1) selon l'une quelconque des revendications 1 à 10 **caractérisé en ce que** les micromailles de ladite feuille en métal déployé présentent une forme de losange dont l'ouverture de passage est de 200 µm et les dimensions sont de 0,75 mm (LD) x 0,5 mm (CD) x 0,20 mm (La.) x 0,15 mm (Ep.), ladite feuille en métal déployé présentant une surface de vide égale à 29% de la surface totale de ladite feuille.

13. Dispositif de plaque support (1) selon l'une quelconque des revendications 1 à 10 **caractérisé en ce que** les micromailles de ladite feuille en métal déployé présentent une forme de losange dont l'ouverture de passage est de 250 µm et les dimensions sont de 0,85 mm (LD) x 0,7 mm (CD) x 0,20 mm (La.) x 0,15 mm (Ep.), ladite feuille en métal déployé présentant une surface de vide égale à 30% de la surface totale de ladite feuille.

## Patentansprüche

1. Trägerplattenvorrichtung (1) für den Transport von Back-, Konditorei-, Feingebäckwaren oder dergleichen durch mindestens eine Verarbeitungseinheit einer Anlage zum Produzieren solcher Produkte hindurch, die Vorrichtung (1) umfassend einen Rahmen (2), an dem mindestens ein Blech (5) aus metallischem Material befestigt ist, das aus einem Blech aus Streckmetall besteht, wobei die Vorrichtung **dadurch gekennzeichnet ist, dass** das Metallblech Mikromaschen umfasst, die ein Metallgitter ausbilden, wobei die Mikromaschen eine Durchgangsöffnung zwischen 130 und 750 µm vorweisen und das Blech aus Streckmetall umfassend, aufgrund der Mikromaschen, eine leere Oberfläche zwischen 17 und 60 % der Gesamtoberfläche des Blechs.

2. Trägerplattenvorrichtung (1) nach Anspruch 1,
**dadurch gekennzeichnet, dass** die Mikromaschen eine Durchgangsöffnung zwischen 130 und 250 µm vorweisen und das Blech aus Streckmetall umfassend, aufgrund der Mikromaschen, eine leere Oberfläche zwischen 17 und 45 % der Gesamtoberfläche des Blechs.

3. Trägerplattenvorrichtung (1) nach Anspruch 1 oder 2,
**dadurch gekennzeichnet, dass** das Blech aus Streckmetall, umfassend Mikromaschen, mit einer Antihaftbeschichtung bedeckt ist.

4. Trägerplattenvorrichtung (1) nach Anspruch 3,
**dadurch gekennzeichnet, dass** die Antihaftbeschichtung aus Polytetrafluorethylen (PTFE) besteht.

5. Trägerplattenvorrichtung (1) nach Anspruch 3,
**dadurch gekennzeichnet, dass** die Antihaftbeschichtung aus einer Sol-Gel-Beschichtung besteht.

6. Trägerplattenvorrichtung (1) nach Anspruch 3,
**dadurch gekennzeichnet, dass** die Antihaftbeschichtung aus einem Silikonpolymer besteht.

7. Trägerplattenvorrichtung (1) nach einem der Ansprüche 1 bis 6, **dadurch gekennzeichnet, dass** das Blech aus Streckmetall, umfassend Mikromaschen, aus einem Metallmaterial hergestellt ist, das aus Aluminium und Edelstahl ausgewählt ist.

8. Trägerplattenvorrichtung (1) nach einem der Ansprüche 1 bis 7, **dadurch gekennzeichnet, dass** das Blech aus Streckmetall durch Biegen so geformt ist, dass es mindestens eine im Wesentlichen halbrunde Zelle (11) ausbildet, die eine vertiefte Einlassung zum Aufnehmen mindestens eines Teiglings oder mindestens eines Brots oder dergleichen darstellt, wobei sich die Zelle (11) in Längsrichtung von einem Rand der Trägerplatte (1) zu dem anderen erstreckt.

9. Trägerplattenvorrichtung (1) nach einem der Ansprüche 1 bis 8, **dadurch gekennzeichnet, dass** sie eine Vielzahl von Blechen aus Streckmetall aufweist, die jeweils durch Biegen so geformt sind, dass sie eine im Wesentlichen halbrunde Zelle (11) ausbilden, die eine vertiefte Einlassung zum Aufnehmen mindestens eines Teiglings oder mindestens eines Brots oder dergleichen darstellt, wobei sich jede der Zellen (11) in Längsrichtung von einem Rand des Blechs zu dem anderen zwischen zwei in Längsrichtung verlaufenden Zellenträgern erstreckt.

10. Trägerplattenvorrichtung (1) nach einem der Ansprüche 1 bis 7, **dadurch gekennzeichnet, dass** die Oberfläche des Blechs aus Streckmetall eben oder im Wesentlichen eben ist.

11. Trägerplattenvorrichtung (1) nach einem der Ansprüche 1 bis 10, **dadurch gekennzeichnet, dass** die Mikromaschen des Blechs aus Streckmetall eine Rhombusform vorweisen, deren Durchgangsöffnung 200 µm beträgt und deren Abmessungen 0,6 mm (LD -lange Diagonale) x 0,4 mm (CD-kurze Diagonale) x 0,12 mm (La.-Breite des Riemens) x 0,10 mm (Ep.-Dicke des Riemens) sind, wobei das Blech aus Streckmetall eine leere Oberfläche vorweist, die gleich 28 % der Gesamtoberfläche der Blechs ist.

12. Trägerplattenvorrichtung (1) nach einem der Ansprüche 1 bis 10, **dadurch gekennzeichnet, dass** die Mikromaschen des Blechs aus Streckmetall eine Rhombusform vorweisen, deren Durchgangsöffnung 200 µm beträgt und deren Abmessungen 0,75 mm (LD) x 0,5 mm (CD) x 0,20 mm (La.) x 0,15 mm (Ep.) sind, wobei das Blech aus Streckmetall eine leere Oberfläche vorweist, die gleich 29 % der Gesamtoberfläche des Blechs ist.

13. Trägerplattenvorrichtung (1) nach einem der Ansprüche 1 bis 10, **dadurch gekennzeichnet, dass** die Mikromaschen des Blechs aus Streckmetall eine Rhombusform vorweisen, deren Durchgangsöffnung 250 µm beträgt und deren Abmessungen 0,85 mm (LD) x 0,7 mm (CD) x 0,20 mm (La.) x 0,15 mm (Ep.) betragen, wobei das Blech aus Streckmetall eine leere Oberfläche vorweist, die gleich 30 % der Gesamtoberfläche des Blechs ist.

## Claims

1. Support tray device (1) for transporting bakery, patisserie, viennoiserie or similar products through at least one processing unit of an installation for producing such products, said device (1) comprising a frame (2) on which at least one sheet of metal material (5) consisting of an expanded-metal sheet is fixed, said device being **characterized in that** said metal sheet comprises micromeshes forming a metal lattice, said micromeshes having a passage opening of between 130 and 750 µm and said expanded-metal sheet comprising, as a result of said micromeshes, a voids surface area of between 17 and 60% of the total surface area of said sheet.

2. Support tray device (1) according to claim 1, **characterized in that** said micromeshes have a passage opening of between 130 and 250 µm and said expanded-metal sheet comprising, as a result of said micromeshes, a voids surface area of between 17 and 45% of the total surface area of said sheet.

3. Support tray device (1) according to claim 1 or claim 2, **characterized in that** said expanded-metal sheet comprising micromeshes is covered with a non-stick coating.

4. Support tray device (1) according to claim 3, **characterized in that** said non-stick coating consists of polytetrafluoroethylene (PTFE).

5. Support tray device (1) according to claim 3, **characterized in that** said non-stick coating consists of a sol-gel coating.

6. Support tray device (1) according to claim 3, **characterized in that** said non-stick coating consists of a silicone polymer.

7. Support tray device (1) according to any one of claims 1 to 6, **characterized in that** said expanded-metal sheet comprising micromeshes is made of a metal material chosen from aluminum and stainless steel.

8. Support tray device (1) according to any one of claims 1 to 7, **characterized in that** said expanded-metal sheet is shaped by bending so as to form at least one substantially half-circle cell (11) constituting a recessed housing for receiving at least one dough piece or at least one loaf or the like, said cell (11) extending longitudinally from one edge to the other of said support tray (1).

9. Support tray device (1) according to any one of claims 1 to 8, **characterized in that** it comprises a plurality of expanded-metal sheets each shaped by bending so as to form a substantially half-circle cell (11) constituting a recessed housing for receiving at least one dough piece or at least one loaf or the like, each of the cells (11) extending longitudinally from one edge to the other of said sheet between two longitudinal cell supports.

10. Support tray device (1) according to any one of claims 1 to 7, **characterized in that** the surface of said expanded-metal sheet is flat or substantially flat.

11. Support tray device (1) according to any one of claims 1 to 10, **characterized in that** the micromeshes of said expanded-metal sheet have a diamond shape of which the passage opening is 200 µm and the dimensions are 0.6 mm (LD - long diagonal) x 0.4 mm (SD - short diagonal) x 0.12 mm (W - width of the strip) x 0.10 mm (T - thickness of the strip), said expanded-metal sheet having a voids surface area equal to 28% of the total surface area of said sheet.

12. Support tray device (1) according to any one of claims 1 to 10, **characterized in that** the micromeshes of said expanded-metal sheet have a diamond shape of which the passage opening is 200 µm and the dimensions are 0.75 mm (LD) x 0.5 mm (SD) x 0.20 mm (W) x 0.15 mm (T), said expanded-metal sheet having a voids surface area equal to 29% of the total surface area of said sheet.

13. Support tray device (1) according to any one of claims 1 to 10, **characterized in that** the micromeshes of said expanded-metal sheet have a diamond shape of which the passage opening is 250 µm and the dimensions are 0.85 mm (LD) x 0.7 mm (SD) x 0.20 mm (W) x 0.15 mm (T), said expanded-metal sheet having a voids surface area equal to 30% of the total surface area of said sheet.
